# NEUE EUROPÄISCHE PATENTSCHRIFT

(11) **EP 2 201 258 B2**
(45) Veröffentlichungstag und Bekanntmachung des Hinweises auf die Entscheidung über den Einspruch: **25.02.2015**
(45) Hinweis auf die Patenterteilung: 28.03.2012
(21) Anmeldenummer: 08801333.9
(22) Anmeldetag: 15.09.2008
(51) Int. Cl.: F16D 21/00, F16D 23/14

(54) **KUPPLUNGSBETÄTIGUNGSSYSTEM**
CLUTCH ACTUATION SYSTEM
SYSTÈME D'ACTIONNEMENT D'EMBRAYAGE

(30) Priorität: 11.10.2007 DE 102007048712
(43) Veröffentlichungstag der Anmeldung: 30.06.2010
(73) Patentinhaber: Schaeffler Technologies GmbH & Co. KG, 91074 Herzogenaurach (DE)
(72) Erfinder: HONSELMANN, Sebastian, 77830 Bühlertal (DE); HANS, Dominik, 76461 Muggensturm (DE); ORTMANN, Simon, 77866 Rheinau-Linx (DE)
(86) Internationale Anmeldenummer: PCT/DE2008/001541
(87) Internationale Veröffentlichungsnummer: WO 2009/046693

(56) Entgegenhaltungen:
- DE-A1-102004 001 268
- FR-A- 1 300 975
- FR-A- 2 859 773
- GB-A- 1 348 645
- US-A- 4 579 211
- US-A1- 2002 014 385
- US-A1- 2005 217 963

## Beschreibung

Die Erfindung betrifft ein Betätigungssystem zur Betätigung einer Doppelkupplung mittels einer konzentrischen Anordnung des Betätigungssystems um die Getriebeeingangswellen eines nachgeschalteten Doppelkupplungsgetriebes und einem Antrieb durch eine radial außerhalb angeordnete Aktoreinheit.

Zur Betätigung von Doppelkupplungen werden im Stand der Technik radial ineinander geschachtelte und um die Getriebeeingangswellen eines nachgeschalteten Doppelkupplungsgetriebes angeordnete Betätigungskolben vorgeschlagen, die auf unterschiedlichen Durchmessern jeweils auf ein Hebelsystem, beispielsweise eine Tellerfeder, einer Kupplung einwirken und diese je nach ihrer Bauart als zwangsweise geöffnete oder geschlossene Kupplung durch axiale Verlagerung des Hebelsystems schließen oder öffnen. Die Kolben werden dabei entweder mechanisch durch Hebel axial verlagert, wobei diese Hebel wiederum hydraulisch oder elektrisch angetrieben werden können. Alternativ können die Kolben als Ringkolben eines Nehmerzylinders ausgebildet sein und durch Druckänderung von zwei voneinander getrennten Druckkammern, in denen die Ringkolben dichtend und verlagerbar angeordnet sind, verlagert werden.

Ein Betätigungssystem mit von außen angetriebenen Hebeln ist beispielsweise aus der FR 2 859 773 A bekannt. Ein weiteres Betätigungssystem ist aus US-A-2002/014385 bekannt. Um die beiden die Hebelsysteme der Kupplungen beaufschlagenden Kolben unabhängig voneinander betreiben zu können, ist ein Kolben radial innerhalb und der andere außerhalb von einer an der Getriebegehäusewand befestigten Führungshülse aufgenommen. Die von Aktoreinheiten axial verlagerten Kolben wirken dabei auf die Hebelsysteme der Kupplungen ein und werden selbst von Hebel beaufschlagt, die von den Aktoreinheiten betätigt werden. Zur Betätigung des radial innerhalb der Führungshülse angeordneten Kolbens sind hierzu Längsschlitze in der Führungshülse vorgesehen, durch die der Hebel mit entsprechenden Anformungen zur Beaufschlagung des Hebels greift.

Aufgabe der Erfindung ist die Weiterbildung des Stands der Technik bezüglich von außen angetriebener Betätigungssysteme für Doppelkupplungen. Insbesondere soll eine einfache Konstruktion bei leichter Montage in Verbindung mit einem funktionssicheren Betrieb auch unter robusten Bedingungen angestrebt werden.

Die Aufgabe wird durch ein Betätigungssystem zur Betätigung einer Doppelkupplung nach Anspruch 1 gelöst.

Durch Anordnung der beiden Kolben radial außerhalb der Führungshülse kann diese relativ eng an die Getriebeeingangswellen des Doppelkupplungsgetriebes angenähert werden, so dass insgesamt ein kompakter Aufbau der Führungshülse möglich ist. Weiterhin kann die Führungshülse ohne Ausbrüche und daher statisch stabil und für hohe mechanische Anforderungen ausgestaltet werden. Gegebenenfalls durch Ausbrüche oder Ausnehmungen in der Führungshülse konstruktiv vorgegebene Ansatzstellen für Schwingungsrisse können entfallen. Weiterhin können beide Hebel zur Beaufschlagung der Kolben einfach ausgestaltet werden, da beide von Ihnen zu beaufschlagenden Ansätze an den Kolben außen liegende Flanschteile sind. Besondere Überlegungen wie beispielsweise vorzuhaltende Toleranzen, Reibungseinflüsse, Verschleiß, Schwingungsverhalten, Statik und dergleichen an den Durchgriffen des Hebels für ein radial innerhalb der Führungshülse können entfallen.

In erfinderischer Weise werden stattdessen die Kolben vor dem Verdrehen der Kolben beispielsweise infolge eines von der drehenden Kupplung auf die Kolben übertragenes Schleppmoments und die Unabhängigkeit der Kolben während einer Bewegung zur unabhängigen Betätigung der beiden Kupplungen gelöst, indem sich die beiden Kolben an der Führungshülse drehfest abstützen und sich deren Funktionselemente in einer Weise überlagern, dass sowohl der axiale wie auch der radiale Bauraum gering gehalten werden kann. So übergreifen sich die Kolben axial und radial, so dass der von dem Betätigungssystem beanspruchte Bauraum abgesehen von dem zusätzlichen Hebel nicht wesentlich größer ist als der für einen einzelnen Ausrücker dieser Bauweise.

Im Wesentlichen benötigt jeder Kolben zwei Funktionselemente, nämlich einen Beaufschlagungsbereich für das Hebelsystem der von dem Kolben betätigten Kupplung und einen Beaufschlagungsbereich für den Hebel der den Kolben beaufschlagenden Aktoreinheit. Zusätzlich kann ein weiteres Funktionselement in Form eines Endanschlags vorgesehen sein, der den Weg des Kolbens in axiale Richtung an einer oder an beiden Seiten begrenzt. Der erfinderische Gedanke besteht darin, die Beaufschlagungsbereiche für die Hebelsysteme einerseits und die Beaufschlagungsbereiche für die Hebelsysteme der Aktoreinheiten andererseits zusammen zu gruppieren und diese Gruppen so zueinander mittels sich über den Umfang abwechselnder, den einzelnen Kolben zugeordneten Umfangssegmenten zu beabstanden, dass die beiden Kolben bei Betätigung der Kupplungen unabhängig voneinander den Abstand zwischen den beiden Beaufschlagungsbereichen ungestört überwinden können.

Um eine einfache Montage gewährleisten zu können, kann einer der beiden Kolben zweiteilig ausgebildet sein, so dass dieser quasi in den anderen Kolben in der Weise eingefädelt werden kann, dass sich die beiden Beaufschlagungsbereiche zueinander gruppieren lassen. Die Sicherung gegen Verdrehung kann in der Weise vorgesehen sein, dass die Führungshülse im Querschnitt betrachtet einen nicht rotationssymmetrischen Verlauf aufweist, wobei die Kolben diesem Verlauf nachgebildet sind. Beispielsweise kann die Führungshülse eine oder mehrere axial verlaufende, das heißt in Betätigungsrichtung der Kupplungen ausgerichtete Sicken aufweisen, an denen die Kolben über entsprechende komplementär ausgestaltete Anformungen verdrehsicher aufgenommen sind. Die Führungshülse kann hierzu aus Blech ausgeführt und entsprechend beispielsweise mittels Tiefziehverfahren hergestellt sein. Die Sicken können nach radial außen oder nach radial innen ausgeformt sein. Entsprechend verfügen die Kolben über Aus- oder Einformungen. Die Kolben können aus Kunststoff, vorzugsweise verstärktem Kunststoff, mittels Spritzgussverfahren, aus Metall gestanzte, geschmiedete, gesinterte, oder über Blechumformungsverfahren oder aus Leichtmetallen mittels Druckgussverfahren hergestellte Teile sein. Verbindungen einzelner Teilen können mittels Fügeverfahren wie Rasten, Kleben, Schweißen und/oder Nieten hergestellt werden.

Zur Begrenzung des axialen Verfahrwegs zumindest eines Kolbens kann an diesem ein Endanschlagsbereich vorgesehen sein. Bei den vorzugsweise bei Doppelkupplungsgetrieben verwendeten zwangsweise geschlossenen Kupplungen (zugedrückten Kupplungen) kann es vorteilhaft sein, um die Einrücklager an dem Hebelsystem, beispielsweise einer Tellerfeder, unter Vorspannung anzulegen, den Verfahrweg in Öffnungsrichtung der Kupplung zu begrenzen, so dass bei geöffneter Kupplung die Spannung der Tellerfeder den Kolben gegen einen Endanschlag drückt. Ein geeigneter Endanschlag kann sich dabei an dem Getriebegehäuse oder an der Führungshülse, beispielsweise im Bereich des radial erweiterten Bords zur Befestigung dieser am Getriebegehäuse abstützen.

Zur Verminderung der Reibung der Teile aufeinander können diese beschichtet sein, beispielsweise mit Teflon-haltigen Gleitschichten, diamantähnlichem Kohlenstoff (DLC) und dergleichen. Es versteht sich, dass im Bereich der Gleitlagertechnik in vorteilhafter Weise verwendete Gleitstoffe ebenfalls zur Verminderung des Reibwerts und zur dauerhaften Schmierung verwendet werden können.

Die Erfindung wird anhand der Figuren 1 bis 10 näher erläutert. Dabei zeigen:
- Figur 1: einen Längsschnitt durch ein Ausführungsbeispiel eines Betätigungssystems,
- Figur 2: eine Ansicht einer Führungshülse,
- Figuren 3 bis 5: verschieden Darstellungen eines Teils eines ersten Kolbens,
- Figuren 6 und 7: verschiedene Darstellungen eines anderen Teils eines ersten Kolbens,
- Figur 8 und: einen Zusammenbau des ersten Kolbens
- Figuren 9 und 10: verschiedene Darstellungen eines zweiten Kolbens.

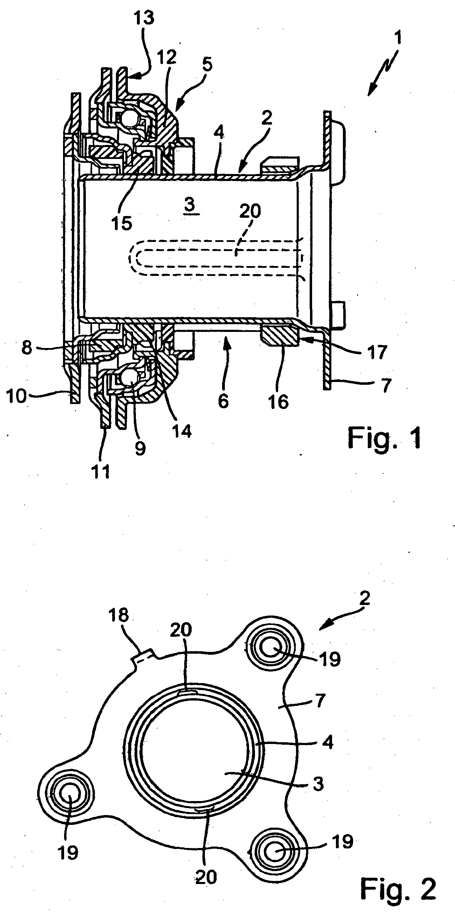

Figur 1 zeigt ein mögliches Ausgestaltungsbeispiel eines Betätigungssystems 1 mit einer Führungshülse 2, beispielsweise bei Verwendung zweier zugedrückter Kupplungen bei geschlossenen Kupplungen. Die Führungshülse 2 weist einen rohrförmigen Abschnitt 4 mit einer Durchführung 3 für die gewöhnliche als Welle und Hohlwelle ineinander geschachtelten Getriebeeingangswellen des Doppelgkupplungsgetriebes auf, der die beiden Kolben 5, 6 aufnimmt und führt. An der den Kupplungen abgewandten Seite ist das Führungsrohr radial unter Bildung eines Bords 7 erweitert, der an der - nicht dargestellten - Getriebegehäusewand zu den Getriebeeingangswellen zentriert befestigt ist.

Die beiden Kolben 5, 6 tragen an ihrem dem Bord 7 abgewandten Ende jeweils ein Wälzlager 8, 9, das bei einer zugedrückten Kupplung als Einrücklager, bei aufgedrückten Kupplungen als Ausrücklager dient und eine verdrehbare Beaufschlagung der sich an die Wälzlager 8, 9 anschließenden Hebelsysteme wie Tellerfedern durch die Kolben 5, 6 ermöglicht. Zur Anpassung des Wirkdurchmessers der Wälzlager 8, 9 an die zu beaufschlagenden Durchmesser der Hebelsysteme der Kupplungen kann an einer oder beiden Wälzlagern ein Druckring 10, 11 vorgesehen sein.

In dem gezeigten Ausführungsbeispiel ist der Beaufschlagungsbereich 12 für das Hebelsystem der Kupplung mit dem Wälzlager 9 und der Beaufschlagungsbereich 13 für den Hebel der Aktoreinheit an einem Teil vorgesehen, während der Kolben 6 aus einem separaten Bauteil 14 mit dem Beaufschlagungsbereich 15 für das Hebelsystem für die Kupplung, das das Wälzlager 8 trägt, und aus einem separaten Bauteil 16 mit dem Beaufschlagungsbereich 17 für den Hebel der Aktoreinheit gebildet ist. Die Wälzlager 8, 9 werden auf den Beaufschlagungsbereichen 12, 15 der beiden Kolben befestigt, beispielsweise verkrallt, verspannt oder verklipst.

Die den einzelnen Kolben 5, 6 zugeordneten - nicht dargestellten - Aktoreinheiten, die elektrisch, hydraulisch, elektrohydraulisch oder pneumatisch eine Kraft auf einen Hebel oder ein anderweitig ausgestaltetes Kraftübertragungselement ausüben können, bewegen mittels dieser Kraft jeweils einen - nicht dargestellten - Hebel, der sich gehäusefest, beispielsweise am Getriebegehäuse oder an der Kupplungsglocke abstützt und eine Hebelkraft auf die Beaufschlagungsbereiche 13, 17 überträgt, wodurch diese axial entlang des rohrförmigen Abschnitts 4 axial verlagert werden und die Kraft über die Wälzlager 8, 9 auf die Hebelsysteme der ihnen zugeordneten Kupplungen übertragen, wodurch diese betätigt werden, das heißt je nach Typ der Kupplungen aus- oder eingerückt werden. Die Umkehr dieses Betätigungsvorgangs erfolgt durch die Kupplungen kraftunterstützt, da beim Betätigungsvorgang das Hebelsystem vorgespannt wird. In der Führungshülse sind im gezeigten Beispiel zwei sich gegenüberliegende, von innen nach außen geprägte Sicken 20 zur Führung und Verdrehsicherung der Kolben 5, 6 vorgesehen, die das über die Wälzlager 8, 9 auf die Kolben 5, 6 wirkende Lastmoment in Drehrichtung der Kupplungen abstützen. Es versteht sich, dass die Sicken 20 auch nach radial innen geprägt werden können, soweit zwischen den Getriebeeingangswellen und der Führungshülse entsprechender radialer Bauraum einkalkuliert wird.

Figur 2 zeigt eine Draufsicht auf die Führungshülse 2 der Figur 1 mit der Öffnung 3, dem radial erweiterten Bord 7 und dem rohrförmigen Abschnitt 4 mit den Sicken 20. Am Bord 7 ist eine Positionierhilfe 18 in Form einer ausgestellten und abgewinkelten Zunge vorgesehen, die in eine im Getriebegehäuse vorgesehene Öffnung eingreift und die Führungshilfe auf dem Getriebegehäuse positioniert und anschließend auf die Getriebeeingangswellen zentriert wird. In kinematischer Umkehr kann im Getriebegehäuse ein Stift vorgesehen sein, der in eine entsprechende in der Führungshülse vorgesehene Öffnung mit Zentrierspiel eingreift. Die Öffnungen 19 können Buchsen enthalten und dienen zur Aufnahme der Führungshülse am Getriebegehäuse mittels Schrauben oder Nieten.

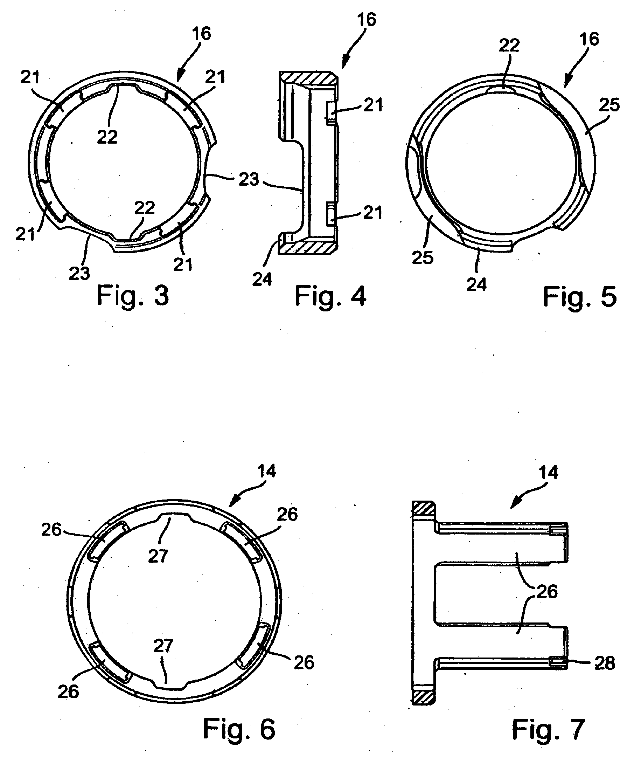

Die Figuren 3 bis 5 zeigen das den Kolben 6 bildende Bauteil 16 in Vorderansicht (Figur 3), als Längsschnitt (Figur 4) und in Rückansicht (Figur 5). Aus Figur 3 werden die in Richtung des zweiten, den Kolben 6 bildenden Bauteils 14 ausgerichteten Ausnehmungen 21 deutlich, die über den Umfang verteilt sind und die in Richtung des Bauteils 16 ausgerichteten Arme des Bauteils 14 aufnehmen. In Umfangsrichtung betrachtet zwischen jeweils zwei Ausnehmungen 21 sind die Nuten 22, die die Sicken 20 (Figur 1) der Führungshülse nachbilden und den Verdrehschutz für den Kolben 6 bilden, vorgesehen. Die Ausnehmungen 23 dienen zur Freistellung des Hebels der Aktoreinheit zur Betätigung des Kolbens 5, wenn beispielsweise der Kolben 5 in Richtung Bord 7 (Figur 1) zurückgefahren wird, damit der Hebel das Bauteil 16 zumindest teilweise axial übergreifen kann und damit axialer Bauraum gespart werden kann.

Figur 4 verdeutlicht die Lage der Ausnehmungen 21 und 23 sowie einen dem Profil der Führungshülse im Bereich des Übergangs zum Bord 7 (Figur 1) angepassten Anschlag 24 für den Kolben 5 (Figur 1). Der maximal zurücklegbare Weg des Kolbens 5 wird dabei so ausgelegt, das das elastische Hebelsystem der Kupplung bei Erreichen des Anschlags 24 an der Führungshülse noch nicht vollständig entlastet ist, so dass zur Verminderung von Geräuschen das Wälzlager unter Vorspannung verbleibt.

Die Figur 5 zeigt neben dem Anschlag 24 und den Ausnehmungen 22 weitere Ausnehmungen 25, die über einen Teil des Umfangs und der axialen Breite des Bauteils 16 ausgebildet sind und die Anlageflächen für den Hebel der Aktoreinheit bilden. Der Winkel der Hebel zueinander kann so variiert werden, dass nach außen auskragende Aktoreinheiten sich gegenseitig nicht stören beziehungsweise der Getriebestruktur und -geometrie angepasst werden können. Weiterhin kann vorgesehen sein, die Hebel miteinander fluchtend und ineinander geschachtelt vorzusehen, insbesondere, wenn beide Aktoreinheiten zu einer Baueinheit zusammengefasst werden.

Die Figuren 6 und 7 zeigen das den Kolben 6 der Figur 1 bildende zweite Bauteil 14 mit axial in Richtung des Bauteils 16 auskragenden, in Gleitkontakt mit der Führungshülse 2 (Figur 1) stehenden Armen 26 in Vorderansicht (Figur 6) und im Längsschnitt (Figur 7). Das Bauteil 14 weist ebenfalls Ausnehmungen 27 zur Führung an den Sicken 20 (Figur 1) auf. Die Arme 26 weisen an ihren Enden Rasteinrichtungen 28 auf, die mit den Ausnehmungen 21 des Bauteils 16 (Figur 3) einen Formschluss bilden. Alternativ kann bei Verwendung von Metallteilen beispielsweise eine Passung gewählt werden, da die Teile nicht auf Zug beansprucht werden. Weitere Fügemethoden wie Kleben, Schweißen, beispielsweise Ultraschallschweißen, oder Nieten können ebenfalls vorteilhaft sein.

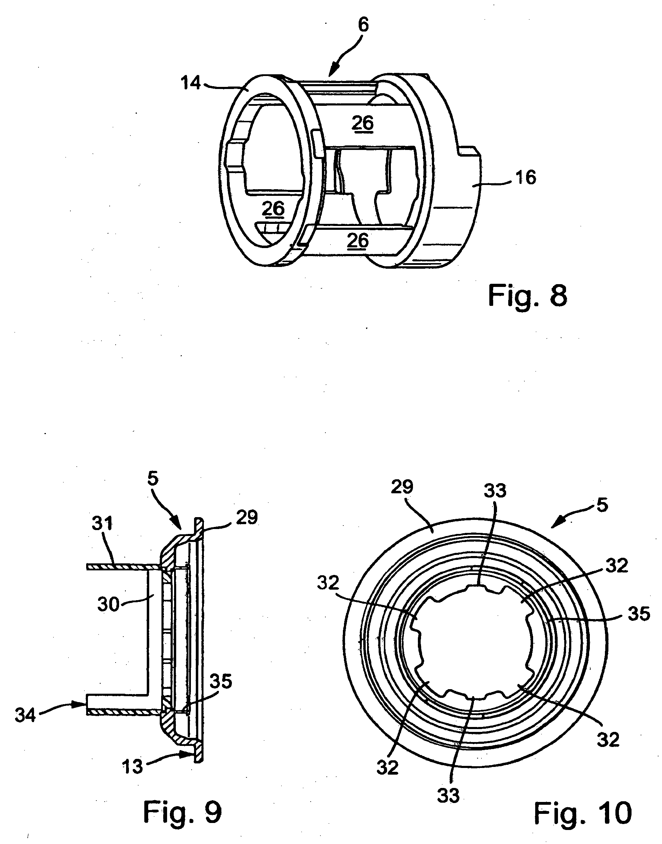

Der aus den Bauteilen 14, 16 zusammengesetzte Kolben 6 ist in Figur 8 dargestellt. Eine Zweiteilung des Kolbens 6 hat insbesondere Montagevorteile; da die beiden Kolben 5 und 6 (Figur 1) sich axial übergreifen, wird der Kolben 5 vor dem Zusammenbau - hier nicht gezeigt - über die Arme 26 des Bauteils 14 gesteckt. Erst danach werden die beiden Teile 14, 16 zusammengefügt und auf die Führungshülse 2 (Figur 1) gesteckt.

Die Figuren 9 und 10 zeigen den Kolben 5 der Figur 1 im Längsschnitt (Figur 9) und in Vorderansicht (Figur 10). Der Kolben 5 kann einteilig aus Kunststoff oder Metall gebildet sein, im Ausführungsbeispiel der Figuren 9 und 10 ist er zweiteilig aus einem Kolbenboden 29 und einem Kolbenhemd 30 mit zwei axial erweiterten, über den Umfang sich vorzugsweise gegenüber stehenden Armen 31 gebildet, die in ihrem radialen Durchmesser so erweitert sind, dass sie das Bauteil 16 (Figur 4) axial übergreifen und mit ihren stirnseitigen Enden jeweils einen Anschlag 34 entsprechend den Anschlägen 24 des Bauteils 24 (Figur 5) 34 zur Wegbegrenzung des Kolbens 5 bilden. Der Kolben 5 kann weitere axiale Arme zur Führung auf der Führungshülse aufweisen. Hierzu wären im Kolben 6 entsprechende Ausbrüche vorzusehen. Im gezeigten ist der Kolben 5 lediglich mit seinem Innendurchmesser auf der Führungshülse 2 (Figur 1) aufgenommen, so dass ein gewisser Grad an Schwenkbarkeit gegenüber der Führungshülse ermöglicht wird. Zur axialen Durchführung der Arme 26 des zum Kolben 6 gehörigen Bauteils 14 weist der Kolbenboden 29 Ausnehmungen 32 auf. In Umfangsrichtung zwischen jeweils zwei Ausnehmungen 32 sind zwei weitere Ausnehmungen 33 für die in dem gezeigten Ausführungsbeispiel radial erhaben ausgestalteten Sicken 20 (Figur 1) zur Verdrehsicherung des Kolbens 5 auf der Führungshülse vorgesehen. Der Beaufschlagungsbereich 13 bildet die Anlagefläche für den - nicht dargestellten - Hebel der diesem Kolben 5 zugeordneten Aktoreinheit. Der axial am Kolbenboden 29 angeformte Ansatz 35 dient der Aufnahme des in Kontakt zum Hebesystem der Kupplung stehenden Wälzlagers. Der Beaufschlagungsbereich 13 übergreift den Ansatz 35 axial, so dass die Kontaktfläche des Wälzlagers nahezu auf gleicher axialer Höhe wie die Beaufschlagungsfläche des Beaufschlagungsbereichs 13 ist und damit axialer Bauraum gespart werden kann.

Der Kolbenboden 29 kann aus Metall oder Kunststoff gefertigt sein. Das Kolbenhemd 30 mit den Armen 31 ist bevorzugt aus Kunststoff hergestellt. Zur Herstellung des Kolbens 5 kann der Kolbenboden 29 in einem Spritzgussverfahren mit dem Kolbenhemd 30 umspritzt werden.

Die Kolben 5 und 6 werden jeweils mittels ihrer Arme 26 (Figur 5) und 34 axial auf der Führungshülse 2 (Figur 1) und mittels der in der Führungshülse eingebrachten Sicken 20 verdrehsicher geführt. Dadurch kann zur Minimierung der Reibung jeweils ein Axialspalt zwischen den Armen 26, 34 vorgesehen sein. Soll die Führungsfläche der Arme vergrößert werden, können die Arme auch in Gleitkontakt zueinander anliegen. Entsprechende Maßnahmen zur Verminderung des entstehenden Gleitkontakts wie fetten und/oder aufbringen einer Gleitschicht kann in vorteilhafter Weise vorgesehen werden.

### Bezugszeichenliste

| | | | |
|---|---|---|---|
| 1 | Betätigungseinrichtung | 19 | Öffnung |
| 2 | Führungshülse | 20 | Sicke |
| 3 | Durchführung | 21 | Ausnehmung |
| 4 | Abschnitt | 22 | Nut |
| 5 | Kolben | 23 | Ausnehmung |
| 6 | Kolben | 24 | Anschlag |
| 7 | Bord | 25 | Ausnehmung |
| 8 | Wälzlager | 26 | Arm |
| 9 | Wälzlager | 27 | Ausnehmung |
| 10 | Druckring | 28 | Rasteinrichtung |
| 11 | Druckring | 29 | Kolbenboden |
| 12 | Beaufschlagungsbereich | 30 | Kolbenhemd |
| 13 | Beaufschlagungsbereich | 31 | Arm |
| 14 | Bauteil | 32 | Ausnehmung |
| 15 | Beaufschlagungsbereich | 33 | Ausnehmung |
| 16 | Bauteil | 34 | Anschlag |
| 17 | Beaufschlagungsbereich | 35 | Ansatz |
| 18 | Positionierhilfe | | |

## Patentansprüche

1. Betätigungssystem zur Betätigung einer Doppelkupplung mit zwei mittels eines Hebelsystems axial betätigbaren Kupplungen für ein Doppelkupplungsgetriebe mit einer um zumindest eine Getriebeeingangswelle des Doppelkupplungsgetriebes angeordneten, am Doppelkupplungsgetriebe aufgenommenen Führungshülse (2) und zwei auf dieser aufgenommenen, jeweils ein Hebelsystem einer Kupplung beaufschlagenden, axial entlang der Führungshülse (2) von jeweils einer Aktoreinheit verlagerbaren Kolben (5, 6), jeder Kolben (5, 6) radial außen unmittelbar auf der Führungshülse (2) verdrehsicher angeordnet ist und sich Funktionselemente (12, 15, 13, 17) der Kolben (5, 6) axial übergreifen, **dadurch gekennzeichnet, dass** die Führungshülse (2) im Querschnitt betrachtet einen nicht rotationssymmetrischen Verlauf aufweist, und wobei die Kolben (5, 6) diesem Verlauf nachgebildet sind.

2. Betätigungssystem nach Anspruch 1, **dadurch gekennzeichnet, dass** die Funktionselemente ein Beaufschlagungsbereich (12, 15) für das Hebelsystem und ein Beaufschlagungsbereich (13, 17) für die Aktoreinheit und/oder ein Endanschlagsbereich (24, 34) sind.

3. Betätigungssystem nach einem der Ansprüche 1 oder 2, **dadurch gekennzeichnet, dass** einer der Kolben (5, 6) zweiteilig ist.

4. Betätigungssystem nach einem der Ansprüche 1 bis 3, **dadurch gekennzeichnet, dass** die Führungshülse (2) zumindest eine axial verlaufende Sicke (20) aufweist, an der die Kolben (5, 6) verdrehsicher geführt sind.

5. Betätigungssystem nach einem der Ansprüche 2 bis 4, **dadurch gekennzeichnet, dass** zumindest ein Kolben (6) einen Endanschlagsbereich (24) aufweist, der einen Verfahrweg des Kolbens (6) in Richtung einer Aufnahme (7) der Führungshülse (2) bei noch nicht vollkommen entspanntem Hebelsystem begrenzt.

## Claims

1. Actuation system for actuating a double clutch, having two clutches, which can be actuated axially by means of a lever system, for a double clutch transmission, having a guide sleeve (2) which is arranged around at least one transmission input shaft of the double clutch transmission and which is held on the double clutch transmission, and two pistons (5, 6) which are held on said guide sleeve and which exert a load on in each case one lever system of a clutch and which can be displaced axially along the guide sleeve (2) by in each case one actuator unit, each piston (5, 6) is arranged, so as to be secured against rotation, radially at the outside directly on the guide sleeve (2), and functional elements (12, 15, 13, 17) of the pistons (5, 6) axially overlap, **characterized in that** the guide sleeve (2) has a rotationally asymmetrical profile as viewed in cross section, and wherein the pistons (5, 6) are formed so as to replicate said profile.

2. Actuation system according to Claim 1, **characterized in that** the functional elements are a load exertion region (12, 15) for the lever system and a load exertion region (13, 17) for the actuator unit and/or an end stop region (24, 34).

3. Actuation system according to either of Claims 1 and 2, **characterized in that** one of the pistons (5, 6) is formed in two parts.

4. Actuation system according to one of Claims 1 to 3, **characterized in that** the guide sleeve (2) has at least one axially running bead (20) on which the pistons (5, 6) are guided in a rotationally fixed manner.

5. Actuation system according to one of Claims 2 to 4, **characterized in that** at least one piston (6) has an end stop region (24) which limits a movement travel of the piston (6) in the direction of a receptacle (7) of the guide sleeve (2) when the lever system is not yet fully relieved of load.

## Revendications

1. Système d'actionnement de double embrayage avec deux embrayages pouvant être actionnés dans le plan axial à l'aide d'un système de levier pour une boîte de vitesses à double embrayage, avec un fourreau de guidage (2) disposé vautour d'au moins un arbre d'entrée de boîte de vitesses de la boîte de vitesses à double embrayage et logé au niveau de la boîte de vitesses à double embrayage et deux pistons (5, 6) logés sur ledit fourreau chargeant respectivement un système de levier d'un embrayage et pouvant être déplacés dans le plan axial le long du fourreau de guidage (2) par respectivement une unité d'actionneur, chaque piston (5, 6) étant disposé vers l'extérieur dans le plan radial directement sur le fourreau de guidage (2) de façon sécurisée contre la torsion et les éléments fonctionnels (12, 15, 13, 17) des pistons (5, 6) s'engrenant dans le plan axial, **caractérisé en ce que**, considéré en section transversale, le fourreau de guidage (2) présente une allure qui n'est pas à symétrie de révolution, et les pistons (5, 6) reproduisant cette allure.

2. Système d'actionnement selon la revendication 1, **caractérisé en ce que** les éléments fonctionnels sont une zone de sollicitation (12, 15) du système de levier et une zone de sollicitation (13, 17) de l'unité d'actionneur et/ou une zone de butée finale (24, 34).

3. Système d'actionnement selon l'une quelconque des revendications 1 ou 2, **caractérisé en ce qu'**un des pistons (5, 6) est réalisé en deux parties.

4. Système d'actionnement selon l'une quelconque des revendications 1 à 3, **caractérisé en ce que** le fourreau de guidage (2) comporte au moins une nervure (20) s'étendant dans le plan axial, au niveau de laquelle les pistons (5, 6) sont guidés de façon sécurisée contre la torsion.

5. Système d'actionnement selon l'une quelconque des revendications 2 à 4, **caractérisé en ce qu'**au moins un piston (6) comporte une zone de butée finale (24) qui délimite une course du piston (6) en direction d'une réception (7) du fourreau de guidage (2) lorsque le système de levier n'est pas entièrement relâché.
